# EUROPÄISCHE PATENTSCHRIFT

(11) **EP 1 232 119 B1**
(45) Veröffentlichungstag und Bekanntmachung des Hinweises auf die Patenterteilung: **03.11.2004**
(21) Anmeldenummer: 00993133.8
(22) Anmeldetag: 22.11.2000
(51) Int. Cl.: C02F 1/00

(54) **VERFAHREN UND VORRICHTUNG ZUR BEHANDLUNG VON FLÜSSIGKEITEN**
METHOD AND DEVICE FOR THE TREATMENT OF FLUIDS
PROCEDE ET DISPOSITIF DE TRAITEMENT DE LIQUIDES

(30) Priorität: 23.11.1999 DE 19956257; 10.02.2000 DE 10005907
(43) Veröffentlichungstag der Anmeldung: 21.08.2002
(73) Patentinhaber: Reichwein, Dietrich, 5700 Zell am See (AT); Peters, Olaf, 9772 Dellach/an der Drau (AT)
(72) Erfinder: Reichwein, Dietrich, 5700 Zell am See (AT); Peters, Olaf, 9772 Dellach/an der Drau (AT)
(74) Vertreter: Pfenning, Meinig & Partner
(86) Internationale Anmeldenummer: PCT/DE2000/004132
(87) Internationale Veröffentlichungsnummer: WO 2001/038226

(56) Entgegenhaltungen:
- EP-A- 0 357 102
- EP-A- 0 670 288
- WO-A-98/30501
- DE-A- 19 543 573
- US-A- 4 299 701
- US-A- 5 925 292
- PATENT ABSTRACTS OF JAPAN vol. 1998, no. 04, 31. März 1998 (1998-03-31) -& JP 09 314135 A (TAKARADA MASAAKI), 9. Dezember 1997 (1997-12-09) -& DATABASE WPI Week 199808 Derwent Publications Ltd., London, GB; AN 1998-080927 XP002167142

## Beschreibung

Die vorliegende Anmeldung bezieht sich auf eine Vorrichtung sowie ein Verfahren zur Behandlung von Flüssigkeiten. Derartige Vorrichtungen und Verfahren werden überall dort benötigt, wo Flüssigkeiten im Prozeßablauf eingesetzt oder als Endprodukt benötigt werden. Dies ist beispielsweise der Fall im Bereich der Getränkeindustrie der Trinkwässer, der Brauchwässer, der Oberflächen-/Tiefwässer, der Nutzwässer aller Art sowie der technischen Flüssigkeiten aller Art beispielsweise der Treib- und Brennstoffe oder auch bei der Wasserkühlung von Verbrennungsmotoren.

Der molekulare Aufbau des Wassers lautet H-O-H oder H₂O. Diese Formel trifft aber nur auf den dampfförmigen Aggregatzustand zu. Wenn Wasser zu einer Flüssigkeit kondensiert, wird die Formel viel komplexer. Man kann sagen, daß Wasser -neben polymeren Clustergebilden- auch Flüssigkeitskristalle mit variablen Bindungen enthält. Dies bedeutet, daß Wasser seine Struktur in Abhängigkeit von inneren und äußeren Kräften und Feldern ändert. Die besonderen Eigenschaften und Anomalien, wie beispielsweise seine größte Dichte bei 4 °C, seine Ausdehnung bei Abkühlung und Änderung der Oberflächenspannung in Abhängigkeit von der jeweiligen Clusterbildung sind auf die besondere Form der Bindung zweier Wasserstoffatome an ein Sauerstoffatom zurückzuführen.

Wasser hat ein ungewöhnlich hohes Dipolmoment. Die Größe des Dipolmoments hängt dabei von der örtlichen Ladungstrennung innerhalb des Moleküls ab. Dieses Dipolmoment ist Ursache der hohen Lösungsfähigkeit verschiedener Stoffe, wie beispielsweise Natriumchlorid und bedingt auch die bekannten Anomalien. Durch seine stark polare Wirkung richtet sich ein Wassermolekül leicht im elektrischen Feld aus.

Das Dipolmoment von Wasser ist deshalb so hoch, weil sich H₂O-Moleküle über die Wasserstoffbrücke derart zu polymeren Clusterketten verbinden, daß die positiv geladenen Kerne der Wasserstoffatome exponiert offen liegen, weil deren Elektronen in den Bahnen des Sauerstoffatoms miteingebunden sind. Dadurch entsteht eine gewaltige, positive, als Wasserstoffbrückenbindung bezeichnete elektrostatische Kraft.

Wasser aus verschiedenen Quellen weist einen deutlichen Qualitätsunterschied gegenüber allgemeinen Oberflächen- bzw. Tiefenwässern auf.

In der Natur vorkommende Quellwässer sind dadurch gekennzeichnet, daß die Quellwässer aus größerer Höhe Herabfallen und aus dem Gestein beim Aufprall feinste, nicht neutrale Kolloide herausschlagen, die sich aufgrund der Massenanziehung zwischen die beiden H-Atome einlagern und aufgrund ihrer elektrischen Ladung möglicherweise den Bindungswinkel spreizen.

Es sind zur Zeit unterschiedlichste Flüssigkeitsaufbereitungseinrichtungen und Geräte bekannt, die sich mit mannigfaltigen Zielsetzungen, wie Feinstfilterung, Umkehrosmose, Vermeidung von Ablagerungen an Rohrwänden sowie Ausscheidungs- bzw. Entkeimungsaufgaben, erfolgreich auseinandersetzen. Weiterhin sind Verfahren bekannt geworden, bei denen mittels künstlich hergestellter ladungsbehafteter Kolloide, die dem Wasser in vorgegebener Menge beigegeben werden, der natürliche Vorgang bei Quellwässern nachgeahmt wird. Der Nachteil dieser Verfahren liegt darin, daß erstens die Herstellungskosten der Kolloide zu Buche schlagen und zweitens nicht eine exakte, der H-O-H-Menge entsprechende Anzahl von Kolloidpartikeln dem Wasser zugemengt werden kann.

Aus PATENT ABSTRACTS OF JAPAN vol. 1998, no. 04, 31. März 1998 (1998-03-31) -& JP 09 314 135 A (TAKARADA MASAAKI), 9. Dezember 1997 (1997-12-09) -& DATABASE WPI Week 199808 Derwent Publications Ltd., London, GB; AN 1998-080927 XP002167142 ist eine Vorrichtung zur Behandlung von Wasser bekannt, bei der ein Gefäß mit dem zu behandelnden Wasser von einer Klein'schen Spule umgeben ist. Das Wasser steht dabei in dem Gefäß und wird chargenweise behandelt.

Aufgabe der vorliegenden Erfindung ist es daher, eine Vorrichtung und ein Verfahren zur Verfügung zu stellen, mit dem Flüssigkeiten behandelt werden können.

Diese Aufgabe wird durch die Vorrichtung nach Anspruch 1 sowie das Verfahren nach Anspruch 14 sowie die Verwendungen nach Anspruch 17 bis 19 gelöst. Vorteilhafte Weiterbildungen des erfindungsgemäßen Verfahrens werden in den abhängigen Ansprüchen gegeben.

Die vorliegende Erfindung hat also das Ziel, die Eigenschaften von Flüssigkeiten zu verbessern, beispielsweise das vorwiegend in polymeren Clustergebilden vorhandene Wasser. Die Lösung der vorliegenden Erfindung liegt darin, daß beobachtet wurde, daß, wenn Flüssigkeiten, wie Wasser, mit vorgegebener Geschwindigkeit in monopolaren bzw. Quasi-Single-Pol-Magnetfeldern bewegt wird, bei richtiger Auslegung die Qualität der Flüssigkeit bzw. des Wassers, vermutlich aufgrund einer Strukturbeeinflussung, verändert wird.

Das erfindungsgemäße Verfahren und die erfindungsgemäße Vorrichtung eignen sich zur Behandlung von Frischwässern, Brackwässern, Abwässern, Oberflächen- und Tiefwässern sowie Nutzwässern aller Art. Sie eignen sich auch zur Behandlung von technischen Flüssigkeiten, wie beispielsweise Treib- und Brennstoffen.

Das Verfahren bedient sich zur Strukturbeeinflussung des Wassers an sich bekannter Klein'scher Feldspulen, die die Eigenschaft aufweisen, daß sich die magnetischen Feldlinien so verhalten, daß sie die Topologie einer Klein'schen Flasche annehmen. Derartige Klein'sche Spulen sind veröffentlicht durch Shinichi SEIKE "The Principles of Ultrarelativity", Space Research Institute, Uwajima, Ninomiya Press, JAPAN.

Werden derartige Klein'sche Spulen gegenläufig gewikkelt, so entstehen magnetische Quasi-Single-Pole derart, daß die beiden Spulenenden gleiche Polarität aufweisen und der Gegenpol in der Mitte der Spulenlänge zu liegen kommt. Die Feldstärkenaufteilung ist zu ²/₃ an den Endpolen und zu ¹/₃ am Mittelpol gegeben. Da magnetische Feldlinien sich immer schließen kann je ¹/₆ der Polendfelder nicht mittels dem Mittelpol kompensiert werden und daher wie elektrische Feldlinien mit einer Divergenz unendlich (div ∞) verlaufen.

Wird durch solche offene Feldlinien Wasser geleitet, so wird vermutlich dessen Struktur geändert.

Erfindungsgemäß sind daher über einem Durchflußrohr eine beliebige Anzahl, mindestens jedoch eine Klein'sche Doppelspule angeordnet. Die Formgebung der Rohre, ihre Art und die Art der Installation kann dabei beliebig den jeweiligen Umständen angepaßt sein.

Vorteilhafterweise sind jedoch turbulente Strömungsverhältnisse in dem Durchflußrohr Laminarströmungen vorzuziehen. Strömungsgeschwindigkeit, Feldstärke und Verweilzeit im Klein'schen Magnetfeld sind zueinander in Relation zu setzen, um alle H-O-H-Moleküle mit veränderter Struktur zu erhalten. Unterhalb der durchflußmengenabhängigen Parameter entstehen wie bei natürlichen Quellen beliebige Gemenge von polymeren Clusterketten und Flüssigkristallen.

Das Mengenverhältnis wird vorzugsweise mittels Steuerung der Stromstärke über entsprechende elektrische bzw. elektronische Vorkehrungen nach vorgewählten Kriterien geregelt.

Um die entsprechende turbulente Strömung zu erzeugen, sind vorteilhafterweise im Fluß des Wassers in dem Strömungsrohr Konusscheiben am Einlauf der Anlage angeordnet. Dabei ist mindestens eine Konusscheibe erforderlich, diese können jedoch auch in größerer Anzahl seriell angeordnet sein.

Die Konusscheiben können jedoch auch nicht nur seriell angeordnet sein, sondern auch längs des Strömungsrohres beabstandet zueinander einzeln oder auch einzelne Gruppen benachbart und beabstandet zueinander längs des Strömungsrohres angeordnet sein. Das Strömungsrohr kann weiterhin zwischen den Wirbel- bzw. Konusscheiben oder auch im Falle, daß gar keine Konusscheiben vorhanden sind, teilweise oder vollständig Wirbelkörper enthalten. Als Wirbelkörper eignen sich dabei insbesondere Glaskugeln unterschiedlicher Größe, so daß über die gesamte Wirklänge des elektromagnetischen Feldes eine turbulente Strömung bei allen vorkommenden Durchflußgeschwindigkeiten sichergestellt ist.

Die Spule selbst kann vorteilhafterweise wahlweise mit Gleichspannung oder Wechselspannung, vorteilhafterweise mit positiver Rechteckspannung gespeist werden. Die Frequenz dieser Wechselspannung bzw. positiven Rechteckspannung kann vorteilhafterweise auf die jeweiligen Resonanzfrequenzen von Algen, Parasiten, Bakterien bzw. Viren oder dergleichen in dem zu behandelnden Wasser eingestellt werden. In bevorzugter Weise sieht die elektronische Steuerung dabei vor, ein frei wählbares Breitband mittels Sweeper-Steuerung an sich bekannter Art nach frei wählbaren Zeitkriterien zu durchlaufen, um beispielsweise bei Swimmingpools im by-pass-Umwälzverfahren unerwünschte Algen- bzw. Virenbildung zu unterdrücken.

Die erfindungsgemäße Vorrichtung und das erfindungsgemäße Verfahren können vorteilhaft insbesondere im Bereich der Erzeugung hochqualitativen Wassers, beispielsweise in der Getränkeindustrie eingesetzt werden. Hier können nunmehr technisch die in der Natur ablaufenden Prozesse, die zu hochqualitativen Quellwässern führen, nachgeahmt und durchgeführt werden. Weiterhin können die erfindungsgemäße Vorrichtung und das erfindungsgemäße Verfahren auch im Kühlwasserkreislauf eines Verbrennungsmotors eingesetzt werden.

Bei Verwendung des erfindungsgemäß behandelten Kühlwassers werden Ablagerungen im Motor freigespült und im Gegensatz zu normalem Wasser keine Ablagerungen gebildet. Das wasserumspülte Volumen wird also saubergehalten, so daß während der gesamten Lebensdauer des Motors die Wärmeübergangszahl wie von der Konstruktion vorgesehen, erzielt wird. Bei Anwendung von erfindungsgemäß behandelten Treib- und Brennstoffen hat sich herausgestellt, daß auf Grund einer besseren Zerstäubung die Treib- und Brennstoffausnutzung durch den Einsatz der Vorrichtung und des Verfahrens erheblich gesteigert wird. Andererseits wird die Schadstoffemission des Motors stark verringert auf Grund der vollständigen Verbrennung. Dies wird auf eine Auflösung der Tropfenform des Brenn- und Treibstoffes in einen feineren Kraftstoffnebel zurückgeführt.

Im folgenden werden einige Beispiele erfindungsgemäßer Vorrichtungen und Verfahren beschrieben.

Es zeigen:
- Figur 1: den Feldverlauf einer Klein'schen Doppelspule;
- Figur 2: eine erfindungsgemäße Vorrichtung;
- Figur 3: eine weitere erfindungsgemäße Vorrichtung mit Konusscheibeneinsatz;
- Figur 4: die in Figur 3 dargestellten Konusscheiben;
- Figur 5: eine weitere Vorrichtung zur Erzeugung von Strömungswirbeln;
- Figur 6: eine weitere Vorrichtungserzeugung von Strömungswirbeln;
- Figur 7: Meßergebnisse an unbehandeltem und erfindungsgemäß behandeltem Wasser;
und
- Figur 8: weitere Meßergebnisse an unbehandeltem und erfindungsgemäß behandeltem Wasser.

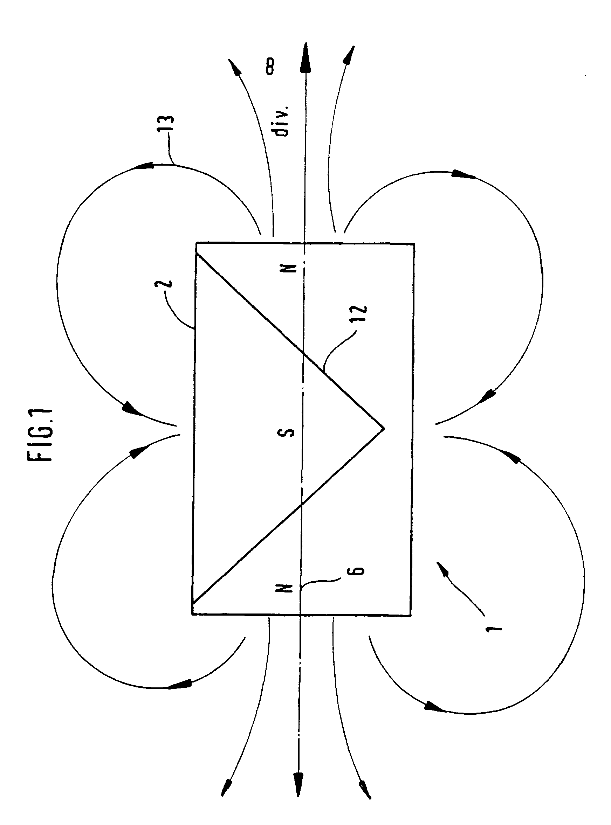

Figur 1 zeigt eine in der erfindungsgemäßen Vorrichtung eingesetzte Klein'sche Doppelspule 1. Die Spule 1 weist einen Spulenkörper 2 auf, um den ringförmig in Art einer herkömmlichen Spule einzelne Windungen eines elektrischen Leiters gelegt sind. Allerdings werden diese einzelnen Windungen im Unterschied zum Stand der Technik in Form von "halben Schlägen" um den Spulenkörper 2 gelegt, so daß sich eine V-förmige Knotenlinie 12 ausbildet. An der Spitze des V's der Knotenlinie 12 wird die Richtung der Spulenwicklung umgekehrt, so daß hier auch die Knoten nunmehr wieder in aufsteigender Weise angeordnet sind, d.h. die Klein'sche Spule ist gegenläufig gewickelt. Insgesamt ergibt sich dann der durch die Feldlinien 13 beschriebene Feldverlauf, sofern die Spule von Strom durchflossen wird.

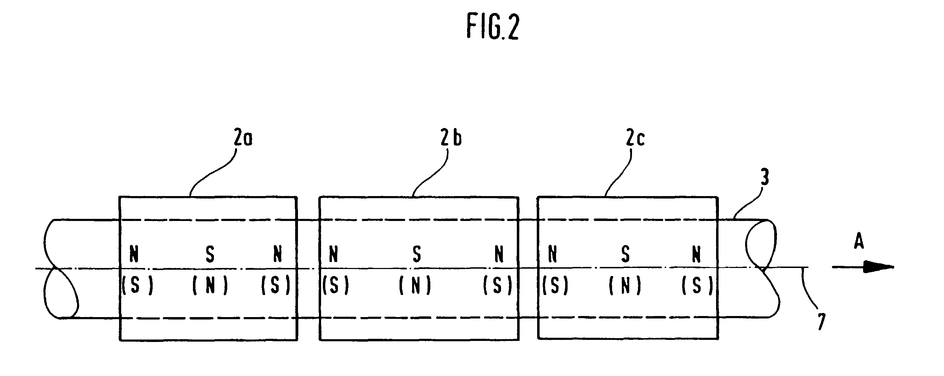

Figur 2 zeigt eine erfindungsgemäße Vorrichtung mit einem Durchflußrohr 3, das von insgesamt 3 Klein'schen Doppelspulen 2a, 2b und 2c umgeben ist. Bei den entsprechenden Klein'schen Doppelspulen ist die Anordnung der magnetischen Pole eingezeichnet. Die gesamte Anordnung ist rotationssymmetrisch um die Achse 6 der Spulen 2a, 2b und 2c sowie um die Achse 7 des Durchflußrohres, das in Richtung des Pfeiles A von Wasser durchflossen wird. Wird dieses Durchflußrohr 3 nun von Wasser in Richtung des Pfeiles A durchflossen und zugleich an die Klein'schen Doppelspulen 2a, 2b und 2c eine Spannung angelegt und diese von Strom durchflossen, so wird das Wasser aufbereitet.

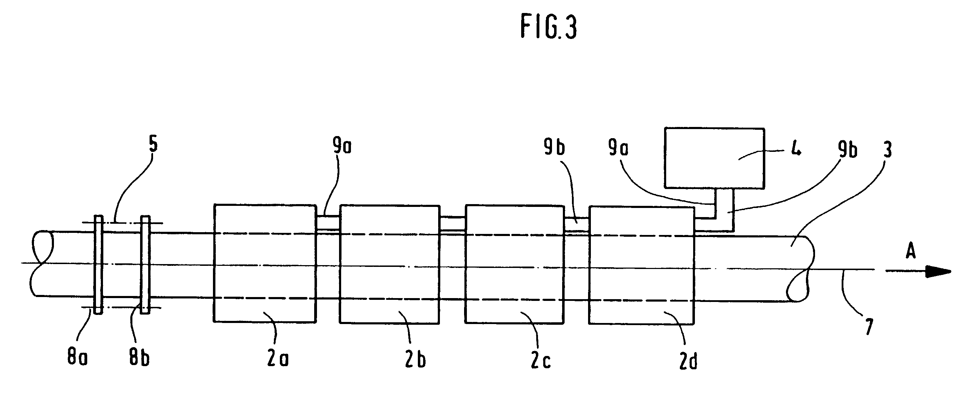

Figur 3 zeigt eine weitere erfindungsgemäße Anordnung, bei der für entsprechende Elemente entsprechende Bezugszeichen verwendet wurden und die Erläuterung demgemäß dann weggelassen wird. Das Durchflußrohr 3 ist nunmehr von vier Klein'schen Doppelspulen 2a, 2b und 2c und 2d umgeben, die seriell in Flußrichtung A des Wassers durch das Durchflußrohr 3 angeordnet sind. Die Klein'schen Doppelspulen sind dabei mit einem Schaltkasten 4 über elektrische Leitungen 9a und 9b verbunden, über die eine Spannung an die einzelnen Spulen angelegt und ein Strom durch die Spulen geleitet werden kann. Der Schaltkasten 4 regelt als Steuergerät über die Stromstärke den Umwandlungsprozeß des Wassers. An die Spule kann dabei eine Gleichspannung oder positive Rechteckspannung angelegt werden, wobei die Frequenz der Rechteckspannung der jeweiligen Resonanzfrequenz von Algen, Parasiten, Bakterien, Viren und anderen schädlichen Organismen im Wasser entspricht. Die elektronische Steuerung durchläuft dabei ein frei wählbares Breitband mittels einer Sweeper-Steuerung nach frei wählbaren Zeitkriterien, so daß mit einer derartigen Vorrichtung beispielsweise bei Swimmingpools im by-pass-Umwälzverfahren unerwünschte Algen- bzw. Virenbildung unterdrückt wird.

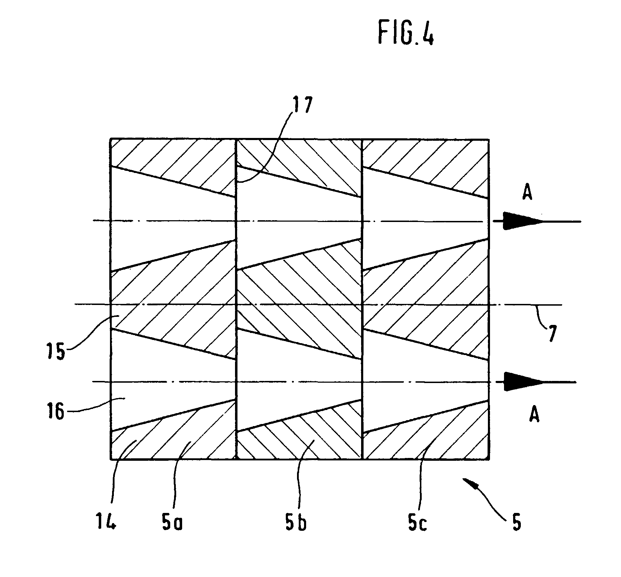

Am Einlauf des Durchflußrohres 3 ist weiterhin in dem Durchflußrohr 3 eine Anordnung von Konusscheiben 5 angeordnet, die mittels Flansche 8a und 8b an dem Durchflußrohr 3 befestigt sind. Diese Anordnung von Konusscheiben ist in Figur 4 genauer dargestellt. Diese Anordnung weist insgesamt drei Konusscheiben 5a, 5b und 5c auf, deren Außenwände 14 in Flußrichtung A des Wassers zusammenlaufen. Wie in Figur 4 dargestellt, befindet sich in der Mittelachse 7 der Konusscheiben 5a, 5b und 5c jeweils eine kegelförmige Anordnung 15, deren Wände in Flußrichtung A auseinanderlaufen. Dadurch bildet sich rotationssymmetrisch um die Achse 7 der Konusscheibenanordnung 5 ein sich verengender Strömungsspalt 16 zwischen der jeweiligen kegelförmigen Anordnung und der Außenwand 14 der Konusscheiben, der beim Übergang in die jeweils nächste Konusscheibe sich schlagartig erweitert. An diesen Stellen wird folglich eine turbulente Strömung erzeugt, so daß die Aufbereitung des durchfließenden Wassers gefördert wird.

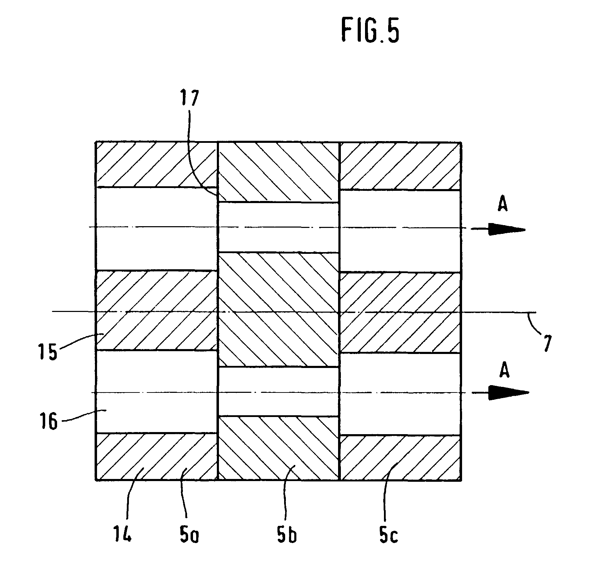

Figur 5 zeigt eine weitere Vorrichtung zur Erzeugung von turbulenter Strömung, die alternativ zu den in den Figuren 3 und 4 dargestellten Konusscheiben verwendet werden kann. Bei dieser Vorrichtung sind mehrere Scheiben 5a, 5b und 5c hintereinander angeordnet, die jeweils eine Außenwand 14 und einen Mitteldorn 15 aufweisen. Rotationssymmetrisch um die Mittelachse dieser Scheiben 5a bis 5c ergibt sich zwischen dem Dorn 15 und der Außenwand 14 ein Volumen 16, in dem die Flüssigkeit in Richtung der Pfeile A strömen kann. Die Radien der Mitteldorne 15 und die Innenradien der Außenwände 14 sind dabei so gewählt, daß der Querschnitt der Volumina 16 sind von einer Scheibe 5a zur nächsten Scheibe 54b bzw. von 5b nach 5c ändert. An den Übergangsstellen entstehen nun Wirbel, die eine turbulente Strömung verursachen. Auch durch diese Anordnung, die in Figur 5 dargestellt ist, kann folglich die Aufbereitung des Wassers gefördert werden.

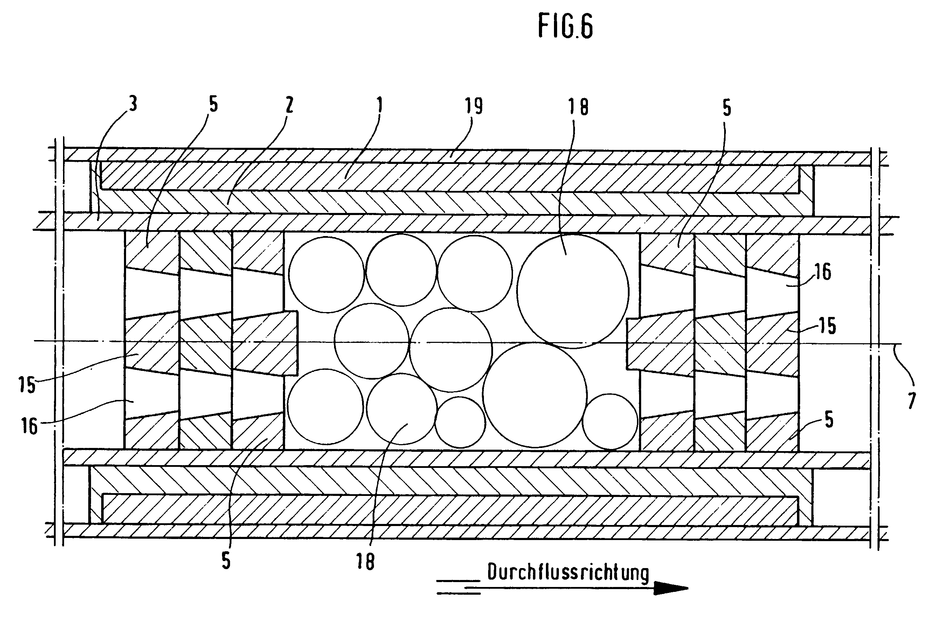

Figur 6 zeigt eine weitere erfindungsgemäße Vorrichtung mit einem Strömungsrohr 3, das von einer Klein'schen Spule 1 bzw. 2 wie oben beschrieben umschlossen ist. Auch diese Spule 1 ist wiederum von einem äußeren Schutzrohr 19 umschlossen. Innerhalb des Durchflußrohres finden sich zwei Gruppen von Konusscheiben 5, 15, wobei jede der Gruppen drei einander formschlüssig benachbarte Konusscheiben mit Mitteldorn 15 aufweist, so daß diese ringförmige Durchlässe 16 ausbilden. Die beiden Dreiergruppen Konusscheiben 5, 15 sind beabstandet voneinander. Der Zwischenraum zwischen diesen beiden Konusscheibengruppen in dem Strömungsrohr 3 ist gefüllt von Wirbelkörper, beispielsweise in diesem Falle Glaskugeln 18, 18' unterschiedlicher Größe. Diese Wirbelkörper stellen sicher, daß bei allen vorkommenden Durchflußgeschwindigkeiten über die gesamte Länge des Strömungsrohres zwischen den Wirbelscheiben 5 der beiden Gruppen eine turbulente Strömung auftritt.

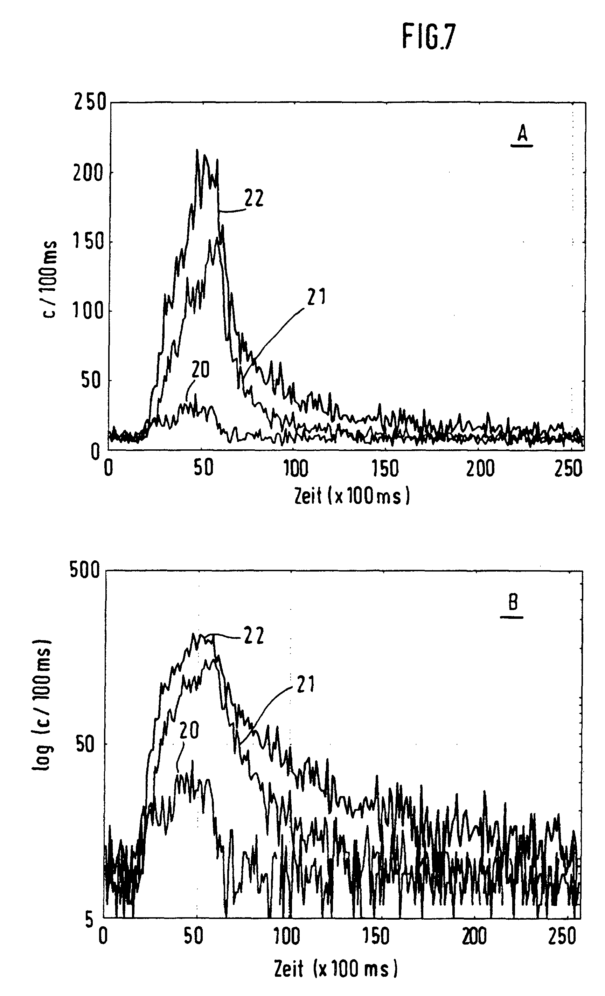

Figur 7 zeigt Messungen in Figur 7A und Figur 7B an unbehandeltem Leitungswasser (Leitungswasser der Gemeinde Neuss), hierzu die Meßkurven 20, sowie von Wasser, das mit einer Vorrichtung gemäß Figur 6 behandelt wurde. Hierzu siehe Meßkurven 21 und 22. Gemessen wurde dabei mit einem Elektroluminiszenzgerät PMS 2, die Biophotonenemission mit einem Fotomultiplier. Dazu wurden 102 ml des zu untersuchenden Wassers in eine aus optischem Glas hergestellte Flasche gefüllt und in die Dunkelkammer des Meßgerätes gestellt. Nach der Dunkeladaption erfolgte eine elektrische Anregung über zwei in die Probenlösung eingetauchte Platinelektroden. Die Dunkeladaption wurde für eine Minute durchgeführt, das Meßintervall dauerte 100 msec, die Anregungsdauer für die elektrische Anregung 4 s mit einer Anregungsspannung von 50 V. Figur 7A zeigt dabei eine lineare Darstellung der Biophotonenemission nach einer derartigen Anregung für unbehandeltes Wasser (Meßkurve 20) und für Wasser, das mit der erfindungsgemäßen Vorrichtung behandelt wurde (Meßkurven 21 und 22). Figur 7B zeigt dieselben Messungen in logarithmischer Darstellung.

Für jede Messung wurde die Probe dreimal hintereinander angeregt.

Zwischen den unbehandelten und behandelten Wasserproben zeigen sich deutliche Unterschiede. Das behandelte Wasser hat eine höhere Biophotonenemission als das unbehandelte Wasser. Hieraus läßt sich schließen, daß in dem Wasser, das mit der erfindungsgemäßen Vorrichtung behandelt wurde, eine Veränderung hervorgerufen wurde.

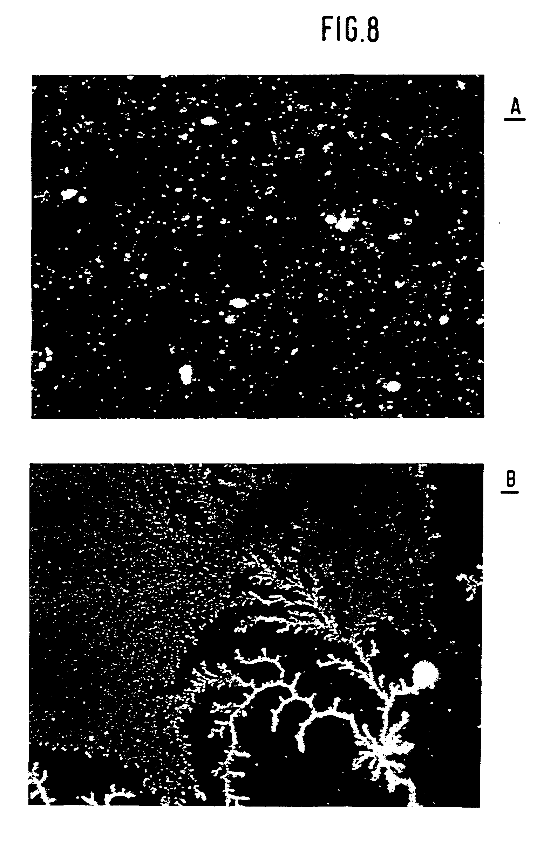

Die Figuren 8A und 8B zeigen Dunkelfeldfotografien von unbehandeltem Londoner Leitungswasser (Figur 8A) und erfindungsgemäß behandeltem Londoner Leitungswasser (Figur 8B). Die Fotografien wurden als 2000-fache Dunkelfeldfotografien im Phasenkontrast und mit einem Probenwinkel von 3,4° gemessen. Hierdurch können Wechselwirkungen von Photonen und Kolloiden bestimmt werden.

Es ist deutlich zu sehen, daß das behandelte Wasser eine andere Struktur aufweist, was sich in den vollkommen anders strukturierten Druckfeldphasenkontrasten der Figur 8B zeigt.

## Patentansprüche

1. Flüssigkeitsbehandlungs-Vorrichtung mit einem Durchflußrohr (3) sowie mindestens einer gegenläufig gewickelten Klein'schen Doppelspule (2a), die das Durchflußrohr (3) umgeben (3) angeordnet ist, und deren Windungen derart in Form von halben Schlägen gelegt sind, dass sich eine V-förmige Knotenlinie ausbildet, an deren Spitze die Richtung der Spulenwicklung sich umkehrt, und wobei an die mindestens eine Spule (2a) eine Spannung derart anlegbar ist, daß die von den Spulen (2a-2d) erzeugten Magnetfelder an den einander zugewandten Enden der Spulen (2a-2d) gleichpolig sind.

2. Vorrichtung nach dem vorhergehenden Anspruch, **dadurch gekennzeichnet, daß** längs des Durchflußrohres mehrere Klein'sche Spulen hintereinander angeordnet sind.

3. Vorrichtung nach einem der vorhergehenden Ansprüche, **dadurch gekennzeichnet, daß** die Klein'schen Spulen mit einem elektrischen Spannungsversorger verbunden sind.

4. Vorrichtung nach einem der vorhergehenden Ansprüche, **dadurch gekennzeichnet, daß** in dem Durchflußrohr mindestens ein Mittel zur Erzeugung turbulenter Strömungsverhältnisse angeordnet ist.

5. Vorrichtung nach dem vorhergehenden Anspruch, **dadurch gekennzeichnet, daß** das Mittel zur Erzeugung turbulenter Strömungsverhältnisse in Strömungsrichtung vor der ersten der mindestens einen Klein'schen Spule angeordnet ist.

6. Vorrichtung nach einem der beiden vorhergehenden Ansprüche, **dadurch gekennzeichnet, daß** das Mittel zur Erzeugung turbulenter Strömungsverhältnisse eine Konusscheibe ist.

7. Vorrichtung nach einem der drei vorhergehenden Ansprüche, **dadurch gekennzeichnet, daß** in Strömungsrichtung vor der ersten der mindestens einen Klein'schen Spule mehrere Konusscheiben aufeinanderfolgend und miteinander formschlüssig derart angeordnet sind, daß jede nachfolgende Konusscheibe mit der Seite ihrer größeren Öffnung der Seite mit der kleineren Öffnung der vorhergehenden Konusscheibe anliegt.

8. Vorrichtung nach einem der Ansprüche 4 oder 5, **dadurch gekennzeichnet, daß** als Mittel zur Steuerung turbulenter Strömungsverhältnisse mehrere Scheiben in Flußrichtung hintereinander angeordnet sind, die jeweils eine Außenwand und einen Mitteldorn aufweisen, wobei die Öffnungen zwischen Außenwand und Mitteldorn jeweils aufeinander folgende Scheiben unterschiedlicher Querschnittsfläche aufweisen und/oder gegeneinander versetzt sind.

9. Vorrichtung nach einem der Ansprüche 6 bis 8, **dadurch gekennzeichnet, daß** in dem Durchflußrohr mehrere voneinander in Flußrichtung beabstandete Konusscheiben oder Gruppen benachbarter Konusscheiben angeordnet sind.

10. Vorrichtung nach einem der vorhergehenden Ansprüche, **dadurch gekennzeichnet, daß** in dem Durchflußrohr ein oder mehrere Wirbelkörper angeordnet sind.

11. Vorrichtung nach dem vorhergehenden Anspruch, **dadurch gekennzeichnet, daß** die Wirbelkörper zumindest teilweise unterschiedliche Größen aufweisen.

12. Vorrichtung nach einem der beiden vorhergehenden Ansprüche, **dadurch gekennzeichnet, daß** die Wirbelkörper Kugeln oder Glaskugeln sind.

13. Vorrichtung nach einem der Ansprüche 10 bis 12, **dadurch gekennzeichnet, daß** die Wirbelkörper im gesamten Durchflußrohr, gegebenenfalls dieses füllend und/oder im Abstand zwischen zwei voneinander beabstandeten Konusscheiben oder Konusscheibengruppen angeordnet sind.

14. Flüssigkeitsbehandlungs-Verfahren
**dadurch gekennzeichnet,**
**daß** die Flüssigkeit längs des Durchflußrohres (3) durch eine Vorrichtung nach einem der vorhergehenden Ansprüche geleitet und dabei an die mindestens eine Klein'sche Doppelspule (2a) eine Spannung angelegt wird.

15. Verfahren nach dem vorhergehenden Anspruch, **dadurch gekennzeichnet, daß** an die Spule eine Gleichspannung oder eine positive Rechteckspannung gelegt wird.

16. Verfahren nach dem vorhergehenden Anspruch, **dadurch gekennzeichnet, daß** an die Spule eine Rechteckspannung gelegt wird, deren Frequenz der Resonanzfrequenz von Algen, Bakterien, Viren, Parasiten und dergleichen entspricht.

17. Verwendung einer Vorrichtung oder eines Verfahrens nach einem der vorhergehenden Ansprüche zur Erzeugung hochqualitativer Wässer, Trinkwässer, Brauchwässer, Abwässer, Oberflächen-/Tiefenwässer, Nutzwässer aller Art sowie technischer Flüssigkeiten aller Art, beispielsweise der Treib- und Brennstoffe.

18. Verwendung nach Anspruch 17 in der Getränkeindustrie, im Kühlwasserkreislauf eines Verbrennungsmotors, für Trinkwässer, Brauchwässer, Abwässer, Oberflächen- oder Tiefenwässer sowie Nutzwässer aller Art.

19. Verwendung einer Vorrichtung nach einem der Ansprüche 1 bis 13 oder eines Verfahrens nach einem der Ansprüche 14 bis 16 zur Behandlung von technischen Flüssigkeiten, Treib- oder Brennstoffe.

## Claims

1. Device for the treatment of fluids with a flow pipe (3) as well as at least one opposingly wound Klein double coil (2a) arranged along the flow pipe (3) and surrounding the same, whose windings are arranged in the form of half loops, so that a V-shaped knot line is formed, at the tip of which the direction of the coil winding is reversed, and whereby a voltage can be applied to the at least one coil (2a) in such a way that the magnetic fields created by the coils (2a-2d) are of the same polarity at the ends of the coils (2a-2d) that face one another.

2. Device according to the preceding Claim, **characterised in that** several Klein coils are arranged along the flow pipe one behind the other.

3. Device according to one of the preceding Claims, **characterised in that** the Klein coils are connected with an electric voltage supply.

4. Device according to one of the preceding Claims, **characterised in that** at least one means for the creation of turbulent streaming characteristics is located within the flow pipe.

5. Device according to one of the preceding Claims, **characterised in that** the means for the creation of turbulent streaming characteristics in positioned in streaming direction before the first of the at least one Klein coil.

6. Device according to one of the two preceding Claims, **characterised in that** the means for the creation of turbulent streaming characteristics consists of a conical disc.

7. Device according to one of the preceding three Claims, **characterised in that** several conical discs are arranged in streaming direction before the first of the at least one Klein coil one behind the other and are positively connected with one another in such a way that each subsequent conical disc abuts with the side with the greatest opening against the side with the smallest opening of the previous conical disc.

8. Device according to one of the preceding Claims 4 or 5, **characterised in that** the means for the control of the turbulent streaming characteristics consists of several discs that are arranged one behind the other in the direction of the flow, and **in that** the same each incorporate one external wall and one central spike, whereby the openings between external wall and central spike of alternating subsequent discs incorporate different cross-sectional surfaces and/or are offset from one another.

9. Device according to one of the preceding Claims 6 to 8, **characterised in that** several conical discs or groups of neighbouring conical discs are positioned at a distance from one another in the direction of the flow within the flow pipe.

10. Device according to one of the preceding Claims, **characterised in that** one or several turbulence bodies are located within the flow pipe.

11. Device according to the preceding Claim, **characterised in that** at least some of the turbulence bodies are of a different size.

12. Device according to one of the two preceding Claims, **characterised in that** the turbulence bodies consist of spheres or glass spheres.

13. Device according to one of the preceding Claims 10 to 12, **characterised in that** the turbulence bodies are located within the entire flow pipe and possibly fill the same and/or are located within the space between two conical discs or conical disc groups positioned at a distance from each other.

14. Method for the treatment of fluids, **characterised in that** the fluid is routed along the flow pipe (3) by a device according to one of the preceding Claims, and **in that** a voltage is applied to the at least one Klein double coil (2a).

15. Method according to the preceding Claim, **characterised in that** a direct current or a positive square wave voltage is applied to the coil.

16. Method according to the preceding Claim, **characterised in that** a square wave voltage is applied to the coil, the frequency of which is equal to the resonance frequency of algae, bacteria, virus, parasites and suchlike.

17. Use of a device or a method according to one of the preceding Claims for the creation of high quality water, potable water, process water, waste water, surface/ground water, utility water of all kinds as well as technical fluids of all kinds such as for example fuel and combustion materials.

18. Use according to Claim 17 within the drinks industry or for the cooling water system of a combustion engine, for potable water, process water, waste water, surface and/or ground water as well as utility water of all kinds.

19. Use of a device according to one of the preceding Claims 1 to 13 or a method according to one of the preceding Claims 14 to 16 for the treatment of technical fluids, fuel or combustion material.

## Revendications

1. Dispositif de traitement de liquides avec un tuyau de circulation (3) ainsi qu'au moins une bobine double de Klein enroulée en sens opposé (2a) qui est disposée pour entourer le tuyau de circulation (3) et dont les spires sont placées en forme de demi-serpentins de telle manière qu'il se forme une ligne nodale en forme de V à l'extrémité de laquelle le sens d'enroulement de la bobine est inversé, et dans lequel une tension peut être appliquée à la au moins une bobine (2a) de telle manière que les champs magnétiques générés par les bobines (2a-2d) ont la même polarité aux extrémités des bobines (2a-2d) tournées les unes vers les autres.

2. Dispositif selon la revendication précédente, **caractérisé en ce que** plusieurs bobines de Klein sont disposées les unes derrière les autres le long du tuyau de circulation.

3. Dispositif selon l'une quelconque des revendications précédentes, **caractérisé en ce que** les bobines de Klein sont raccordées à un dispositif électrique d'alimentation en tension.

4. Dispositif selon l'une quelconque des revendications précédentes, **caractérisé en ce qu'**un moyen pour la génération de conditions d'écoulement turbulentes est placé dans le tuyau de circulation.

5. Dispositif selon l'une quelconque des revendications précédentes, **caractérisé en ce que** le moyen pour la génération de conditions d'écoulement turbulentes est placé dans le sens d'écoulement devant la première de la au moins une bobine de Klein.

6. Dispositif selon l'une quelconque des deux revendications précédentes, **caractérisé en ce que** le moyen pour la génération de conditions d'écoulement turbulentes est un disque conique.

7. Dispositif selon l'une quelconque des trois revendications précédentes, **caractérisé en ce que** plusieurs disques coniques sont placés à la suite les uns des autres et solidaire les uns des autres dans le sens d'écoulement devant la première de la au moins une bobine de Klein, de telle manière que chaque disque conique suivant s'appuie par le côté de sa grande ouverture sur le côté de la petite ouverture du disque conique précédent.

8. Dispositif selon l'une quelconque des revendications 4 ou 5, **caractérisé en ce que**, comme moyen pour la génération de conditions d'écoulement turbulentes, plusieurs disques coniques, qui comprennent chacun une paroi extérieure et une broche centrale, sont placés les uns derrière les autres dans le sens direct, moyennant quoi les ouvertures entre la paroi extérieure et la broche centrale comportent respectivement des disques successifs ayant une aire de section différente et/ou sont décalées les unes par rapport aux autres.

9. Dispositif selon l'une quelconque des revendications 6 à 8, **caractérisé en ce que** plusieurs disques espacés les uns des autres dans le sens direct ou groupes de disques adjacents sont placés dans le tuyau de circulation.

10. Dispositif selon l'une quelconque des revendications précédentes, **caractérisé en ce qu'**un ou plusieurs corps à turbulence sont placés dans le tuyau de circulation.

11. Dispositif selon l'une quelconque des revendications précédentes, **caractérisé en ce que** les corps à turbulence ont des tailles différentes.

12. Dispositif selon l'une quelconque des deux revendications précédentes, **caractérisé en ce que** les corps à turbulence sont des billes ou des billes de verre.

13. Dispositif selon l'une quelconque des revendications 10 à 12, **caractérisé en ce que** les corps à turbulence sont placés dans l'ensemble du tuyau de circulation, remplissant éventuellement celui-ci et/ou à une certaine distance entre deux disques coniques espacés l'un de l'autre ou groupes de disques coniques.

14. Procédé de traitement de liquide **caractérisé en ce que** le liquide est dirigé le long du tuyau de circulation (3) à l'aide d'un dispositif selon l'une quelconque des revendications précédentes et **en ce qu'**une tension est appliquée à la au moins une bobine double de Klein (2a).

15. Procédé selon la revendication précédente, **caractérisé en ce qu'**une tension continue ou une tension rectangulaire positive est appliquée à la bobine.

16. Procédé selon la revendication précédente, **caractérisé en ce qu'**une tension rectangulaire, dont la fréquence correspond à la fréquence de résonance d'algues, de bactéries, de virus, de parasites et analogues, est appliquée à la bobine.

17. Utilisation d'un dispositif ou d'un procédé selon l'une quelconque des revendications précédentes pour la production d'eaux de qualité élevée, d'eaux potables, d'eaux sanitaires, d'eaux résiduaires, d'eaux superficielles/souterraines, d'eaux industrielles de tous types ainsi que de liquides techniques de tous types, par exemple de combustibles et de carburants.

18. Utilisation selon la revendication 17 dans l'industrie des boissons, dans le circuit d'eau de refroidissement d'un moteur à combustion, pour les eaux potables, les eaux sanitaires, les eaux résiduaires, les eaux superficielles ou souterraines ainsi que les eaux industrielles de tous types.

19. Utilisation d'un dispositif selon l'une quelconque des revendications 1 à 13 ou d'un procédé selon l'une quelconque des revendications 14 à 16 pour le traitement de liquides techniques, de combustibles ou de carburants.
